# FASCICULE DE BREVET EUROPEEN

(11) **EP 1 118 625 B1**
(45) Date de publication et mention de la délivrance du brevet: **19.04.2006**
(21) Numéro de dépôt: 01200080.8
(22) Date de dépôt: 11.01.2001
(51) Int. Cl.: C08F 10/02, C08F 2/14, B01J 8/20, B01J 8/00, B01J 8/38

(54) **Procédé de fabrication d'une résine de polyoléfine**
Verfahren zur Herstellung eines Polyolefinharzes
Process for preparing a polyolefin resin

(30) Priorité: 18.01.2000 BE 20000035
(43) Date de publication de la demande: 25.07.2001
(73) Titulaire: Innovene Manufacturing Belgium NV, 2040 Antwerpen (BE)
(72) Inventeur: Marissal, Daniel, 7090 Braine-le-Comte (BE)
(74) Mandataire: Smith, Julian Philip Howard

(56) Documents cités:
- EP-A- 0 891 990
- EP-A- 0 897 934
- GB-A- 850 002
- US-A- 3 816 383
- US-A- 4 692 501
- PATENT ABSTRACTS OF JAPAN vol. 015, no. 256 (C-0845), 28 juin 1991 (1991-06-28) & JP 03 084013 A (MITSUBISHI KASEI CORP), 9 avril 1991 (1991-04-09)

## Description

La présente invention concerne un procédé continu de fabrication d'une résine de polyoléfine ayant une homogénéité améliorée.

La fabrication de résines de polyoléfines par la polymérisation continue dans un diluant est connue depuis longtemps. Généralement, les procédés continus comprennent l'introduction continue d'une oléfine, d'un catalyseur et d'un diluant dans un réacteur de polymérisation et le soutirage continu de ce réacteur d'une suspension comprenant des particules de polyoléfine et le diluant. Ces procédés de fabrication en continu mènent généralement à des résines dont les particules de polymère ont une certaine distribution de taille en fonction de leur temps de séjour dans le réacteur de polymérisation. Les particules de tailles différentes ont souvent également des propriétés différentes, telles que par exemple, l'indice de fluidité et la teneur en résidus catalytiques. Ces propriétés diffèrent dès lors des propriétés moyennes de la résine de polyoléfine obtenue, ce qui peut poser des problèmes lors de ségrégation des résines lors du transport ou de stockage. De plus, les procédés de fabrication connus donnent généralement une fraction non négligeable de fines particules qui peuvent nuire au stockage et à la mise en oeuvre ultérieure des résines.

La présente invention vise à procurer un procédé qui ne présente pas les inconvénients précités.

L'invention concerne dès lors un procédé continu de fabrication d'une résine de polyoléfine ayant une homogénéité améliorée, selon lequel :
(a) dans un réacteur de polymérisation (R) comprenant un diluant (D), une oléfine est polymérisée en continu en présence d'un catalyseur pour produire une suspension (S) comprenant ledit diluant (D) et des particules de polyoléfine,
(b) une partie de la suspension (S) est prélevée du réacteur (R),
(c) la suspension prélevée est envoyée dans un hydrocyclone dans lequel sont formés et séparés, d'une part, un flux (F) comprenant du diluant (D) et des particules de polyoléfine, et, d'autre part, une suspension (SC) concentrée en particules de polyoléfine,
(d) le flux (F) est prélevé de l'hydrocyclone et recyclé au réacteur de polymérisation (R), à l'étape (a),
(e) la suspension concentrée (SC) est prélevée de l'hydrocyclone et introduit dans un réacteur de polymérisation ultérieur (R'), alimenté en oléfine pour continuer la polymérisation et pour produire une suspension (S') comprenant le diluant (D) et des particules de polyoléfine,
(f) une partie de la suspension (S') est prélevée du réacteur de polymérisation ultérieur (R'),
(g) la suspension prélevée est envoyée dans un hydrocyclone dans lequel sont formés et séparés, d'une part, un flux (F') comprenant du diluant (D) et des particules de polyoléfine, et, d'autre part, une suspension (SC') concentrée en particules de polyoléfine,
(h) le flux (F') est prélevé de l'hydrocyclone et recyclé au réacteur de polymérisation (R), à l'étape (a),
(i) la suspension (SC') est prélevée de l'hydrocyclone et les particules de polyoléfine sont séparées de la suspension (SC').

Par polyoléfine, on entend désigner dans la présente invention, aussi bien les homopolymères d'une oléfine que les copolymères d'une oléfine avec une ou plusieurs autres oléfines ou d'autres comonomères copolymérisables avec l'oléfine:

L'oléfine mise en oeuvre dans les étapes de polymérisation (a) et (e) du procédé selon l'invention est généralement choisie parmi les oléfines comprenant de 2 à 12 atomes de carbone et leurs mélanges. L'oléfine est de préférence choisie parmi les 1-oléfines comprenant de 2 à 8 atomes de carbone, plus particulièrement parmi l'éthylène, le propylène, le 1-butène, le 1-méthylpentène, le 1-hexène, le 1-octène et leurs mélanges. L'oléfine mise en oeuvre dans le réacteur de polymérisation ultérieur (R'), à l'étape (e), est la même que celle mise en oeuvre dans le réacteur de polymérisation (R), à l'étape (a).

Il va de soi dans les polymérisations aux étapes (a) et (e) du procédé selon l'invention, outre l'oléfine, au moins un autre comonomère copolymérisable avec l'oléfine, peut être mis en oeuvre de façon à fabriquer des copolymères. Les comonomères sont habituellement choisis parmi les oléfines et les dioléfines, conjuguées ou non, comprenant de 2 à 12 atomes. Les 1-oléfines comprenant de 2 à 8 atomes de carbone tels que décrits ci-dessus donnent de bons résultats. Au cas où un ou plusieurs comonomères sont mis en oeuvre, il est préféré d'utiliser le ou les mêmes comonomères dans les réacteurs de polymérisation des étapes (a) et (e). Les quantités de comonomère mises en oeuvre dans les étapes (a) et (e) sont de préférence réglées de façon à ce que le rapport molaire comonomère/oléfine dans le réacteur de polymérisation ultérieur (R'), à l'étape (e), est compris entre 80 et 120 % en poids du rapport molaire comonomère/oléfine dans le réacteur de polymérisation (R), à l'étape (a).

Le diluant (D) mis en oeuvre dans le procédé selon l'invention peut être tout diluant qui est liquide dans les conditions de polymérisation et dans lequel la majeure partie de polymère formé est insoluble dans les conditions de polymérisation. Des diluants appropriés sont les hydrocarbures. Les hydrocarbures aromatiques et aliphatiques cycliques comprenant de 5 à 12 atomes de carbone, tels que le toluène et le cyclohexane conviennent bien. Des diluants préférés sont les hydrocarbures aliphatiques acycliques comprenant de 3 à 8 atomes de carbone, tels que le pentane et l'hexane. Particulièrement préférés sont le propane et l'isobutane.

Selon un cas particulier, le diluant peut être l'oléfine elle-même maintenue à l'état liquide sous sa pression de saturation.

Selon un autre cas particulier, le diluant peut être maintenu sous son état supercritique.

La polymérisation effectuée à l'étape (a) du procédé selon l'invention s'effectue en présence d'un catalyseur. Tout catalyseur permettant la polymérisation d'oléfines peut être utilisé. A titre d'exemples de tels catalyseurs, on peut citer les catalyseurs du type Ziegler, les catalyseurs à base de vanadium ou de chrome, les catalyseurs métallocènes et les catalyseurs à base de métaux de transition des groupes 8 à 12 du Tableau Périodique des Eléments. Ces catalyseurs peuvent être supportés sur un support inorganique ou polymérique. De bons résultats ont été obtenus avec un catalyseur au chrome supporté sur un support comprenant de la silice.

La polymérisation effectuée à l'étape (e) du procédé selon l'invention s'effectue de préférence sans que du catalyseur frais ne soit ajouté au réacteur. En effet, la suspension concentrée (SC) en particules de polyoléfine introduite dans le réacteur de polymérisation ultérieur (R') contient en général encore suffisamment de catalyseur actif provenant du réacteur (R) pour poursuivre la polymérisation.

Il va de soi que dans les polymérisations aux étapes (a) et (e) du procédé, outre l'(les) oléfine(s) et le diluant, d'autres composés peuvent être présents, notamment des cocatalyseurs et des agents de régulation de masse moléculaire, tel que l'hydrogène.

Au cas où un cocatalyseur est ajouté, celui-ci est de préférence ajouté uniquement dans le réacteur de polymérisation (R), à l'étape (a).

Au cas où un agent de régulation est ajouté, il est préférable d'ajouter le même agent de régulation dans les réacteurs de polymérisation des étapes (a) et (e) du procédé. Les quantités d'agent de régulation de la masse moléculaire sont avantageusement réglées de façon à ce que le rapport molaire agent de régulation/oléfine dans le réacteur de polymérisation ultérieur (R'), à l'étape (e), est compris entre 80 et 120 % du rapport molaire agent de régulation/oléfine dans le réacteur de polymérisation (R), à l'étape (a). De manière préférée, le rapport molaire agent de régulation/oléfine est substantiellement le même dans les réacteurs de polymérisation des étapes (a) et (e).

La polymérisation effectuée dans les étapes (a) et (e) du procédé peut se faire dans des conditions de température et de pression très variables. Généralement, la polymérisation s'effectue à une température de 20 à 150 °C, de préférence de 25 à 130°C. Habituellement, la polymérisation s'effectue à une pression de 10⁵ à 100.10⁵ Pa, de préférence de 10.10⁵ à 55.10⁵ Pa.

Habituellement, la température de polymérisation dans l'étape (e) du procédé est comprise entre 95 et 105 % de la température de polymérisation dans l'étape (a) du procédé selon l'invention. De préférence, la différence entre les températures de polymérisation dans les étapes (a) et (e) ne dépasse pas 3 °C. Plus particulièrement, la différence ne dépasse pas 1 °C.

La polymérisation effectuée à l'étape (a) s'effectue en présence de particules de polyoléfine, recyclées au réacteur (R) via les flux (F) et (F'). La quantité de particules de polyoléfine recyclées dans le réacteur (R) est généralement d'au moins 1 % en poids par rapport au poids total de particules de polyoléfine prélevées du réacteur (R). La quantité de particules recyclées est habituellement d'au moins 10 %, de préférence d'au moins 20 %, en poids par rapport au poids total de particules prélevées du réacteurs (R). La quantité de particules recyclées dans le réacteur (R) ne dépasse généralement pas 95 %, de préférence 60 % en poids par rapport au poids total de particules prélevées du réacteur (R).

Selon une variante du procédé selon l'invention, la polymérisation effectuée à l'étape (a) s'effectue dans plusieurs réacteurs de polymérisation connectés en série. Dans ce cas, la suspension (S) prélevée du dernier réacteur de cette série de réacteurs de polymérisation est envoyée à l'étape (b). Les suspensions issues de chaque réacteur précédant le dernier réacteur de la série peuvent être prélevées et transférées au réacteur suivant de toute manière connue. A cet effet, il peut être avantageux d'utiliser également des hydrocyclones. Dans le cas où l'étape (a) s'effectue dans plusieurs réacteurs en série, le flux (F) peut être recyclé au dernier réacteur de cette série de réacteurs de polymérisation. Selon une forme d'exécution avantageuse, le flux (F) est recyclé à un réacteur de polymérisation précédant ce dernier réacteur.

Dans l'étape (b) du procédé selon l'invention, une partie de la suspension (S) formée dans le réacteur (R) à l'étape (a), est prélevée de ce réacteur. La quantité de suspension prélevée du réacteur (R) peut varier dans de larges mesures. Généralement, la quantité de suspension prélevée du réacteur (R) est réglée de façon à correspondre à la production en polymère.

Dans l'étape (b), la suspension est de préférence prélevée en continu du réacteur de polymérisation (R).

Dans l'étape (c) du procédé selon l'invention, la suspension prélevée du réacteur (R) dans l'étape (b) est envoyée dans un hydrocyclone dans lequel sont formés et séparés, d'une part une suspension (SC) concentrée en particules de polyoléfine et, d'autre part, un flux (F) comprenant des particules de polyoléfine et du diluant (D).

Aux fins de la présente invention, on entend désigner par hydrocyclone tout appareil qui, sous l'action d'une force centrifuge, permet de séparer d'une suspension de particules solides, d'une part, un flux liquide appauvri en particules solides et, d'autre part, un flux concentré en particules solides. De tels appareils sont bien connus, ils ont notamment été décrits dans Perry's Chemical Engineers' Handbook, McGraw-Hill 7^{th} Edition, 1997, pages 19-24 à 19-28. Il va de soi que dans le procédé selon l'invention plusieurs hydrocyclones peuvent être montés en série.

Les valeurs de pression et de température dans l'hydrocyclone sont généralement réglées de façon à ce que la majeure partie du diluant présent reste sous forme liquide. De préférence, la pression et la température sont de l'ordre de grandeur de celles régnant dans le réacteur de polymérisation précédent l'hydrocyclone.

Le fonctionnement de l'hydrocyclone est généralement réglé de façon à ce que le flux (F) recyclé au réacteur (R), à l'étape (a), comprend de 0,5 à 90 % en poids de particules de polyoléfine par rapport au poids total de particules de polyoléfine présentes dans la suspension prélevée du réacteur (R) dans l'étape (b). Le fonctionnement de l'hydrocyclone peut être réglé au moyen de vannes de réglage montées sur les conduites de prélèvement de l'hydrocylcone du flux (F) et de la suspension concentrée (SC). De bons résultats ont été obtenus en réglant le fonctionnement de l'hydrocyclone de façon à ce que le flux (F) recyclé au réacteur (R) comprend au moins 5 % en poids, de préférence au moins 10 % en poids, de particules de polyoléfine par rapport au poids total de particules de polyoléfine présentes dans la suspension prélevée du réacteur (R). La quantité de particules de polyoléfine recyclé au réacteur (R) à l'étape (a) ne dépasse de préférence pas 50 %, plus particulièrement 30 %, en poids du poids total des particules de polyoléfine présentes dans la suspension prélevée du réacteur (R).

Dans l'étape (d) du procédé selon l'invention, le flux (F) est prélevé de l'hydrocyclone et recyclé au réacteur de polymérisation (R). Le flux (F) contient généralement les particules les plus fines, c'est-à-dire celles qui contiennent le moins de polymère. Leur recyclage au réacteur de polymérisation (R) permet d'augmenter leur temps de séjour dans le réacteur de polymérisation de façon à poursuivre la polymérisation et d'augmenter leur taille. Le flux (F) peut comprendre, outre le diluant et les particules de polyoléfine, d'autres composés présents ou formés dans le réacteur de polymérisation. Généralement, le flux (F) comprend des composés présents ou formés dans le réacteur qui sont solubles dans le diluant. Le flux (F) comprend le plus souvent de l'oléfine.

Dans l'étape (e) du procédé selon l'invention, la suspension concentrée (SC) est prélevée de l'hydrocyclone et envoyée dans un réacteur de polymérisation ultérieur (R') dans lequel au moins une oléfine est ajoutée pour continuer la polymérisation.

Il peut être avantageux de rajouter dans le réacteur de polymérisation ultérieur (R') une quantité supplémentaire de diluant (D) tel que défini ci-dessus. Selon une variante du procédé selon l'invention, cette quantité de diluant est ajoutée à la suspension concentrée avant son entrée dans le réacteur de polymérisation ultérieur (R').

Selon une variante du procédé selon l'invention, la polymérisation effectuée à l'étape (e) s'effectue dans plusieurs réacteurs de polymérisation connectés en série. Dans ce cas, la suspension (S') prélevée du dernier réacteur de cette série de réacteurs de polymérisation est envoyée à l'étape (f). Les suspensions issues de chaque réacteur précédant ce dernier réacteur de polymérisation peuvent être prélevées et transférées au réacteur suivant de toute manière connue. A cet effet, il peut être avantageux d'utiliser également des hydrocyclones.

A l'issu de l'étape (e) du procédé selon l'invention, une suspension (S') comprenant du diluant (D) et des particules de polyoléfine est obtenue.

Les quantités respectives de polyoléfine fabriquées dans les étapes (a) et (e) du procédé selon l'invention peuvent varier dans des larges mesures. Généralement la quantité de polyoléfine fabriquée dans l'étape (a) du procédé est comprise entre 20 et 80 % en poids, de préférence entre 30 et.70 % en poids, de la quantité totale de polyoléfine produite dans le procédé selon l'invention. Généralement la quantité de polyoléfine fabriquée dans l'étape (e) du procédé est comprise entre 20 et 80 % en poids, de préférence entre 30 et 70 % en poids, de la quantité totale de polyoléfine produite dans le procédé selon l'invention.

Dans l'étape (f) du procédé selon l'invention, une partie de la suspension (S') présente dans le réacteur (R') est prélevée du réacteur. La quantité de suspension prélevée du réacteur (R') peut varier dans de larges mesures. Généralement, la quantité de suspension prélevée du réacteur (R') est réglée de façon à obtenir dans la suspension concentrée (SC') une quantité de particules de polyoléfine qui correspond à la production totale en polymère.

Dans l'étape (f), la suspension est de préférence prélevée en continu du réacteur de polymérisation (R').

Dans l'étape (g) du procédé selon l'invention, la suspension prélevée du réacteur (R') dans l'étape (f) est envoyée dans un hydrocyclone dans lequel sont formés et séparés, d'une part une suspension (SC') concentrée en particules de polyoléfine et, d'autre part, un flux (F') comprenant des particules de polyoléfine et du diluant (D).

Le fonctionnement de l'hydrocyclone est généralement réglé de façon à ce que le flux (F') recyclé au réacteur (R), à l'étape (a), comprend de 0,5 à 90 % en poids de particules de polyoléfine par rapport au poids total de particules de polyoléfine présentes dans la suspension prélevée du réacteur (R') dans l'étape (f). De bons résultats ont été obtenus en réglant le fonctionnement de l'hydrocyclone de façon à ce que le flux (F') recyclé au réacteur (R) comprend au moins 5 % en poids, de préférence au moins 10 % en poids, de particules de polyoléfine par rapport au poids total de particules de polyoléfine présentes dans la suspension prélevée du réacteur (R'). La quantité de particules de polyoléfine recyclé au réacteur (R) à l'étape (a) ne dépasse de préférence pas 50 %, plus particulièrement 30 %, en poids du poids total des particules de polyoléfine présentes dans la suspension prélevée du réacteur (R').

Les valeurs de pression et de température dans l'hydrocyclone sont généralement réglées de façon à ce que la majeure partie du diluant présent reste sous forme liquide. De préférence, la pression et la température sont de l'ordre de grandeur de celles régnant dans le réacteur de polymérisation précédent l'hydrocyclone.

Dans l'étape (h) du procédé selon l'invention, le flux (F') est prélevé de l'hydrocyclone et recyclé au réacteur de polymérisation (R), c'est-à-dire à l'étape (a) du procédé. Le flux (F') contient généralement les particules les plus fines, c'est-à-dire celles qui contiennent le moins de polymère. Leur recyclage au réacteur de polymérisation (R) permet d'augmenter leur temps de séjour dans les réacteurs de polymérisation de façon à poursuivre la polymérisation et d'augmenter leur taille. Le flux (F') peut comprendre, outre le diluant et des particules de polyoléfine, d'autres composés présents ou formés dans le procédé. Généralement, le flux (F') comprend des composés qui sont solubles dans le diluant. Le flux (F') comprend le plus souvent de l'oléfine. Dans le cas particulier où l'étape (a) est effectuée dans plusieurs réacteurs de polymérisation connectés en série, le flux (F') peut être recyclé au dernier réacteur de polymérisation de cette série. Selon une forme d'exécution avantageuse, le flux (F') est recyclé à un réacteur de polymérisation précédant le dernier réacteur de cette série.

Dans l'étape (i) du procédé selon l'invention, la suspension concentrée (SC') est prélevée de l'hydrocyclone et les particules de polyoléfines y présentes sont séparées de la suspension (SC'). La séparation des particules de polyoléfine peut se faire par toute méthode connue. Les particules de polymère sont généralement séparées de la majeure partie du diluant en soumettant la suspension concentrée (SC') issue de l'étape (g) du procédé selon l'invention à un traitement sous des conditions de pression et de température aptes à vaporiser au moins une partie du diluant. Les particules de polymère ne contenant plus qu'une faible quantité de diluant résiduaire peuvent ensuite être séchées par tout moyen connu, par exemple par chauffage dans un sécheur.

Selon une première variante de l'étape (i) du procédé selon l'invention, la suspension concentrée (SC') est soumise à une détente à une pression inférieure à 5.10⁵ Pa. Le diluant vaporisé peut ensuite être recondensé par compression en vue de sa réutilisation dans le procédé selon l'invention. Avant sa réutilisation, le diluant est habituellement soumis à une épuration de façon à enlever la majeure partie d'oléfine et éventuellement les autres composés présents. Après épuration, le diluant peut être réutilisé aux étapes (a) et/ou (e) du procédé selon l'invention.

Selon une deuxième variante de l'étape (i) du procédé selon l'invention, la suspension concentrée (SC') est soumise à une détente sous des conditions de température et de pression qui assurent la vaporisation de la majeure partie du diluant, mais qui sont telles que le refroidissement ultérieur du diluant vaporisé à une température inférieure ou égale à 60 °C permet sa recondensation sans devoir le comprimer. La température à laquelle est effectuée la détente est généralement comprise entre 50 et 90 °C. Afin de régler la température à laquelle est effectuée la détente, il peut être avantageux de chauffer la suspension concentrée (SC') prélevée de l'hydrocyclone au moyen d'un chauffage en ligne. La pression à laquelle est effectuée la détente est généralement comprise entre 5.10⁵ et 20.10⁵ Pa. Cette variante du procédé présente l'avantage que le diluant ainsi séparé des particules de polymère peut être recondensé par simple refroidissement sans étape de compression et être réutilisé à l'étape (a) et/ou (e) du procédé selon l'invention. Cette deuxième variante de l'étape (i) du procédé est très avantageuse quand on utilise un diluant qui présente une température d'ébullition sous pression atmosphérique qui est inférieure à environ 25 °C.

Lé procédé selon l'invention est applicable à l'obtention d'une résine de polyoléfine. Le procédé selon l'invention est avantageusement applicable à l'obtention de résines de polyéthylène. Par polyéthylène, on entend désigner dans la présente invention, aussi bien les homopolymères de l'éthylène que les copolymères de l'éthylène avec un ou plusieurs autres comonomères copolymérisables avec l'éthylène tels que définis ci-avant. Le procédé convient bien à l'obtention d'un polyéthylène comprenant moins que 10 %, de préférence moins que 5 %, en poids d'unités dérivées d'un autre comonomère. De bons résultats ont été obtenus pour l'obtention d'un copolymère de l'éthylène et des unités dérivées de 1-butène et/ou de 1-hexène.

Le procédé selon l'invention présente l'avantage qu'il permet de resserrer la distribution des temps de séjour des différentes particules de polyoléfine. Le procédé selon l'invention permet dès lors d'obtenir une résine ayant une bonne homogénéité. Le procédé permet notamment d'obtenir des résines dont la distribution des tailles des particules de polyoléfine est resserrée. Le procédé selon l'invention permet également d'obtenir des résines dont la majorité des particules ont des propriétés très voisines des propriétés moyennes de la résine. Les résines obtenues dans le procédé selon l'invention présentent en outre l'avantage de ne contenir qu'une faible quantité de fines particules, plus particulièrement des particules ayant un diamètre inférieur à 200 µm. En outre, et plus spécialement quand un catalyseur à base de chrome supporté est utilisé, le procédé permet d'obtenir un très bon rendement catalytique. Les résines ainsi obtenues ne contiennent que de faibles quantités de résidus catalytiques.

Comme réacteur de polymérisation, on peut utiliser tout réacteur fonctionnant en continu, tels que des réacteurs de type cuve agité ou des réacteurs de type boucle. De bons résultats ont été obtenus avec des réacteurs boucles.

Dans le procédé selon l'invention, le flux (F) peut être prélevé de l'hydrocyclone et recyclé au réacteur (R) en bénéficiant d'une différence de pression régnant dans le réacteur de polymérisation (R). Plus particulièrement, quand le réacteur de polymérisation est un réacteur du type boucle, la suspension (S) peut être prélevée du réacteur et le flux (F) peut être recyclé au réacteur (R) en bénéficiant de la différence de pression régnant en aval et en amont du système d'agitation du réacteur boucle. Il est toutefois préféré de prélever le flux (F) de l'hydrocyclone en créant une différence de pression en amont et en aval de l'hydrocyclone au moyen d'une pompe de circulation. La pompe est de 1 préférence montée sur le circuit de recyclage du flux (F) au réacteur (R).

Dans le procédé selon l'invention, le flux (F') peut être prélevé de l'hydrocyclone et recyclé au réacteur (R) en bénéficiant d'une différence de pression régnant entre le réacteur de polymérisation (R') et le réacteur de polymérisation (R). Il est toutefois préféré de prélever le flux (F') de l'hydrocyclone en créant une différence de pression en amont et en aval de l'hydrocyclone au moyen d'une pompe de circulation. La pompe est de préférence montée sur le circuit de recyclage du flux (F') au réacteur (R).

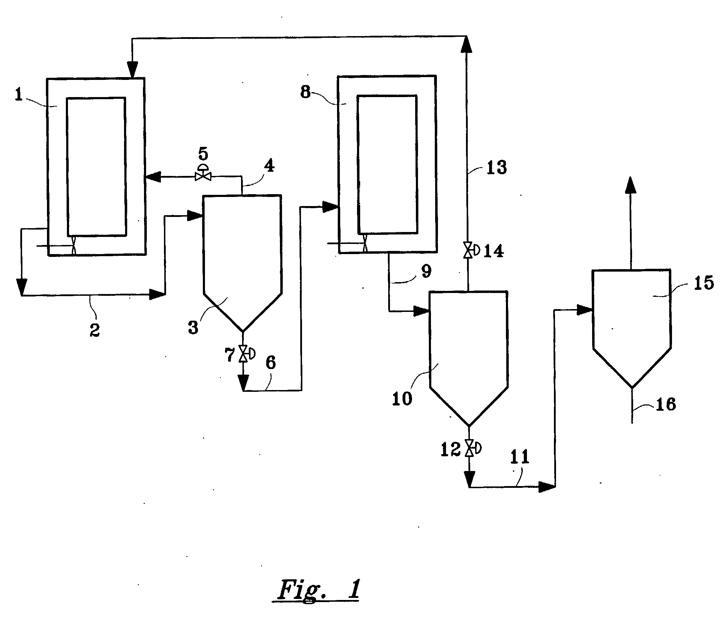

La figure 1 montre schématiquement un dispositif utilisable pour la réalisation du procédé selon l'invention. Dans le schéma de la figure 1, une partie de la suspension comprenant des particules de polyoléfine et du diluant formée dans le réacteur de polymérisation 1 est prélevée par la tubulure 2 et envoyée dans l'hydrocyclone 3 dans lequel sont formés, d'une part, une suspension concentrée en particules de polymère (SC) qui est prélevée de l'hydrocyclone 3 par la vanne 7 montée sur la tubulure 6, et d'autre part un flux (F) comprenant des particules de polymère et qui est enrichi en diluant. Ce flux (F) enrichi en diluant est prélevé de l'hydrocyclone 3 par la tubulure 4 et recyclé au réacteur de polymérisation 1. L'ouverture de la vanne de réglage 5 montée sur la tubulure 4 permet de conditionner la quantité de particules de polyoléfine dans le flux (F). La suspension concentrée (SC) prélevée de l'hydrocyclone 3 via la tubulure 6 est envoyée dans le réacteur de polymérisation 8 dans lequel la polymérisation est poursuivie. Une partie de la suspension formée dans le réacteur 8 comprenant des particules de polyoléfine et du diluant est prélevée du réacteur 8 par la tubulure 9 et envoyée dans l'hydrocyclone 10. Dans l'hydrocyclone 10 sont formés, d'une part, une suspension concentrée en particules de polyoléfine (SC') qui est prélevée de l'hydrocyclone 10 via la tubulure 11 et, d'autre part, un flux (F') comprenant des particules de polymère et qui est enrichi en diluant. Ce flux (F') est prélevé de l'hydrocyclone 10 par la tubulure 13 et recyclé au réacteur de polymérisation 1. L'ouverture de la vanne de réglage 14 montée sur la tubulure 13 permet de conditionner la quantité de particules de polyoléfine dans le flux (F'), ainsi que le degré d'épaississement de la suspension concentrée (SC'). La suspension concentrée (SC') est envoyée dans une cuve 15 maintenue sous une pression inférieure à celle régnant dans l'hydrocyclone 10 (généralement de l'ordre de 5.10⁵ à 15.10⁵ Pa) de façon à y vaporiser la majeure partie du diluant. A cet effet, la tubulure 11 peut éventuellement être munie d'un dispositif de chauffage de conduite (non représenté). Les particules de polyoléfine sont prélevées de la cuve 15 par la tubulure 16.

### Exemple 1

Un essai de polymérisation a été effectué avec le procédé selon l'invention et dans le dispositif décrit à la figure 1. De l'éthylène a été polymérisé en continu dans le réacteur boucle 1 chargé d'isobutane, au moyen d'un catalyseur au chrome supporté sur de la silice (catalyseur EP30X commercialisé par la société Crossfield), de façon à former une suspension comprenant de l'ordre de 32 % en poids de particules de polyéthylène. La température dans le réacteur 1 était de l'ordre de 105 °C; la pression était de l'ordre de 38 10⁵ Pa. Le réacteur a été alimenté en continu en éthylène et en isobutane à un débit de, respectivement, 10 et 3 tonnes/h. Une partie de la suspension de particules de polymère formée dans le réacteur 1 a été prélevée en continu du réacteur 1 par la tubulure 2 à un débit de 47 tonnes/h. Cette suspension comprenait 32 % en poids de particules de polyéthylène et 68 % en poids d'isobutane. Elle a été envoyée en continu dans l'hydrocyclone 3. Le fonctionnement de l'hydrocyclone a été réglé au moyen des vannes de réglage 5 et 7 de façon à obtenir, d'une part, un flux (F) sortant de l'hydrocyclone par la tubulure 4 à un débit de 5 tonnes/h et, d'autre part, une suspension concentrée sortant de l'hydrocyclone par la tubulure 7 à un débit de 42 tonnes/h. Le flux (F) a été recyclé intégralement au réacteur de polymérisation 1; il comprenait 20 % en poids de particules de polyéthylène et 80 % en poids d'isobutane. 90% des particules de polyéthylène se trouvant dans le flux (F) avaient un diamètre inférieur à 200 µm, La suspension concentrée comprenait 33 % en poids de particules de polymère. La suspension concentrée a été introduite dans un réacteur boucle 8. Le réacteur boucle 8 a été alimenté en continu en éthylène et en isobutane à un débit de, respectivement, 10 et 12 tonnes/h. La température dans le réacteur 8 était de l'ordre de 105 °C ; la pression était de l'ordre de 37 10⁵ Pa. Une partie de la suspension de particules de polyéthylène du réacteur 8 a été prélevée en continu par la tubulure 9 à un débit de 64 tonnes/h. Cette suspension comprenait 37,5 % en poids de particules de polyéthylène. Cette suspensiori a été envoyée en continu dans l'hydrocyclone 10. Le fonctionnement de l'hydrocyclone 10 a été réglé au moyen des vannes de réglage 12 et 14 de façon à obtenir, d'une part, un flux (F') sortant de l'hydrocyclone 10 par la tubulure 13 à un débit de 29 tonnes/h et, d'autre part, une suspension concentrée sortant de l'hydrocyclone 10 par la tubulure 11 à un débit de 35 tonnes/h. Le flux (F') a été recyclé intégralement au réacteur de polymérisation 1 ; il comprenait 14 % en poids de particules de polyéthylène et 86 % en poids d'isobutane. La suspension concentrée comprenait 57 % en poids de particules de polymère.

La suspension concentrée a été envoyée dans la cuve 15 pour en séparer les particules de polymère.

La résine de polyéthylène obtenue présentait un indice de fluidité MI₂ de 0,93 g/10 min et une teneur en Si,(provenant du catalyseur) de 68 ppm. Elle présentait un diamètre moyen de 450 µm et comprenait moins que 3 % en poids de particules ayant un diamètre inférieur à 280 µm. La résine de polyéthylène a été fractionnée par tamisage et les fractions de particules de diamètre différent ont été analysées. Les résultats sont repris dans le tableau I.

### Exemple 2 (non conforme à l'invention)

Une résine de polyéthylène ayant les mêmes propriétés moyennes (MI₂, teneur en Si, taille moyenne des particules) que la résine fabriquée dans le procédé décrit dans l'exemple 1 a été fabriquée dans un dispositif ne comprenant qu'un seul réacteur boucle et un seul hydrocyclone. De l'éthylène a été polymérisé en continu dans le réacteur boucle chargé d'isobutane, au moyen du catalyseur de l'exemple 1, de façon à former une suspension comprenant de l'ordre de 50 % en poids de particules de polyéthylène. La température dans le réacteur était de l'ordre de 105 °C; la pression était de l'ordre de 38 10⁵ Pa. Le réacteur a été alimenté en continu en éthylène et en isobutane à un débit de, respectivement 13 et 10,4 tonnes/h. Une partie de la suspension de particules de polymère formée dans le réacteur a été prélevée en continu du réacteur. Cette suspension comprenait 50 % poids de particules de polyéthylène et 50 % en poids d'isobutane. Elle a été envoyée en continu dans l'hydrocyclone. Le fonctionnement de l'hydrocyclone a été réglé de façon à obtenir, d'une part, un flux (F) sortant de l'hydrocyclone à un débit de 5,2 tonnes/h et, d'autre part, une suspension concentrée sortant de l'hydrocyclone à un débit de 23,4 tonnes/h. Le flux (F) a été recyclé intégralement au réacteur de polymérisation; il comprenait 25 % en poids de particules de polyéthylène et 75% en poids d'isobutane. La suspension concentrée comprenait 56 % en poids de particules de polymère. La suspension concentrée a été introduite directement dans la cuve 15 pour en séparer les particules de polymère.

La résine de polyéthylène obtenue présentait un indice de fluidité MI₂ de 0,95 g/10min et une teneur en Si (provenant du catalyseur) de 65 ppm. Elle présentait un diamètre moyen de 420 µm. La résine de polyéthylène a été fractionnée par tamisage et les fractions de particules de diamètre différent ont été analysées. Les résultats sont repris dans le tableau I.

### Exemple 3 (non conforme à l'invention)

Le procédé décrit dans l'exemple 2 a été reproduit sauf que le passage dans l'hydrocyclone 3 a été omis.

La résine de polyéthylène obtenue présentait un indice de fluidité MI₂ de 0,90 g/10 min et une teneur en Si (provenant du catalyseur) de 75 ppm. Elle présentait un diamètre moyen de 430 µm. La résine de polyéthylène a été fractionnée par tamisage et les fractions de particules de diamètre différent ont été analysées. Les résultats sont repris dans le tableau I.

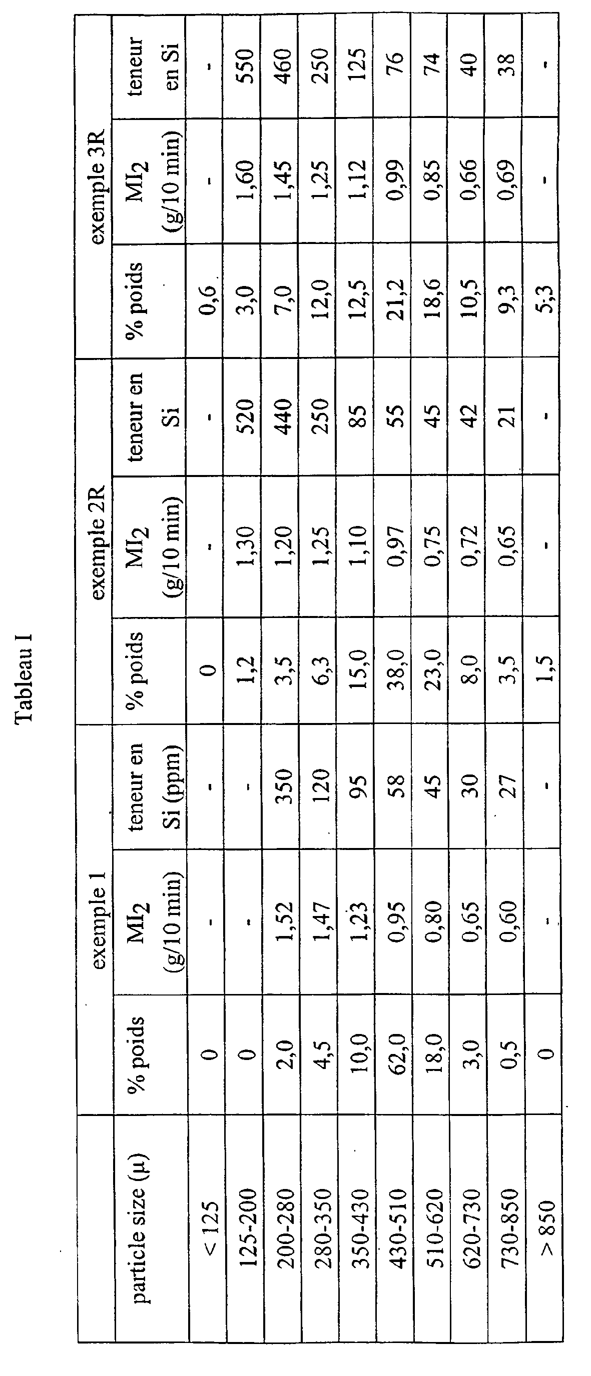

La comparaison de l'exemple 1 avec les exemples comparatifs 2 et 3 montre que le procédé selon l'invention permet d'obtenir une résine ayant une distribution des tailles de particules nettement plus étroite et une teneur en fines particules nettement réduite. Par ailleurs, la distribution pondérale des propriétés, telles que la teneur en résidus catalytiques et l'indice de fluidité MI₂, est plus étroite pour les résines obtenues selon l'exemple 1.

### Exemple 4

Un essai de polymérisation a été effectué avec le procédé selon l'invention et dans le dispositif décrit à la figure 1. De l'éthylène a été polymérisé en continu dans le réacteur boucle 1 chargé d'isobutane, au moyen d'un catalyseur au chrome supporté sur de la silice (catalyseur EP30X commercialisé par la société Crossfield), de façon à former une suspension comprenant de l'ordre de 50 % en poids de particules de polyéthylène. La température dans le réacteur 1 était de l'ordre de 106,5 °C; la pression était de l'ordre de 38 10⁵ Pa. Le réacteur a été alimenté en continu en éthylène et en isobutane à un débit de, respectivement, 9 et 3 tonnes/h. Une partie de la suspension de particules de polymère formée dans le réacteur 1 a été prélevée en continu du réacteur 1 par la tubulure 2 à un débit de 24 tonnes/h. Cette suspension comprenait 50 % en poids de particules de polyéthylène et 50 % en poids d'isobutane. Elle a été envoyée en continu dans l'hydrocyclone 3. Le fonctionnement de l'hydrocyclone a été réglé au moyen des vannes de réglage 5 et 7 de façon à obtenir, d'une part, un flux (F) sortant de l'hydrocyclone par la tubulure 4 à un débit de 6 tonnes/h et, d'autre part, une suspension concentrée sortant de l'hydrocyclone par la tubulure 7 à un débit de 18 tonnes/h. Le flux (F) a été recyclé intégralement au réacteur de polymérisation 1; il comprenait 33 % en poids de particules de polyéthylène et 67 % en poids d'isobutane. 90% des particules de polyéthylène se trouvant dans le flux (F) avaient un diamètre inférieur à 200 µm. La suspension concentrée comprenait 56 % en poids de particules de polymère. La suspension concentrée a été introduite dans un réacteur boucle 8. Le réacteur boucle 8 a été alimenté en continu en éthylène et en isobutane à un débit de, respectivement, 10 et 12 tonnes/h. La température dans le réacteur 8 était de l'ordre de 106,5 °C; la pression était de l'ordre de 37 10⁵ Pa. Une partie de la suspension de particules de polyéthylène du réacteur 8 a été prélevée en continu par la tubulure 9 à un débit de 40 tonnes/h. Cette suspension comprenait 50 % en poids de particules de polyéthylène. Cette suspension a été envoyée en continu dans l'hydrocyclone 10. Le fonctionnement de l'hydrocyclone 10 a été réglé au moyen des vannes de réglage 12 et 14 de façon à obtenir, d'une part, un flux (F') sortant de l'hydrocyclone 10 par la tubulure 13 à un débit de 6 tonnes/h et, d'autre part, une suspension concentrée sortant de l'hydrocyclone 10 par la tubulure 11 à un débit de 34 tonnes/h. Le flux (F') a été recyclé intégralement au réacteur de polymérisation 1; il comprenait 17 % en poids de particules de polyéthylène et 83 % en poids d'isobutane. La suspension concentrée comprenait 56 % en poids de particules de polymère.

La suspension concentrée a été envoyée dans la cuve 15 pour en séparer les particules de polymère.

La résine de polyéthylène obtenue présentait un indice de fluidité MI₂ de 0,95 g/10 min et une teneur en Si (provenant du catalyseur) de 40 ppm. Elle présentait un diamètre moyen de 510 µm et comprenait moins que 3 % en poids de particules ayant un diamètre inférieur à 280 µm.

Cet exemple montre que le procédé selon l'invention permet d'obtenir une amélioration du rendement catalytique et, dès lors, des résines comprenant moins de résidus catalytiques.

### Exemple 5

Un essai de polymérisation a été effectué avec le procédé selon l'invention et dans le dispositif décrit à la figure 1. De l'éthylène a été copolymérisé en continu avec du 1-hexène dans le réacteur boucle 1 chargé d'isobutane, au moyen d'un catalyseur au chrome supporté sur de la silice (type COGEL commercialisé par Grace), de façon à former une suspension comprenant de l'ordre de 33 % en poids de particules de polyéthylène. La température dans le réacteur 1 était de l'ordre de 88 °C; la pression était de l'ordre de 38 10⁵ Pa. Le réacteur a été alimenté en continu en éthylène, en 1-hexène et en isobutane à un débit de, respectivement 10, 0,32 et 3 tonnes/h. Une partie de la suspension de particules de polymère formée dans le réacteur 1 a été prélevée en continu du réacteur 1 par la tubulure 2 à un débit de 47,25 tonnes/h. Cette suspension comprenait 31,7 % poids de particules de polymère, 0,5 % en poids de 1-hexène et 67,8 % en poids d'isobutane. Le polymère comprenait environ 3 % en poids d'hexène. La suspension a été envoyée en continu dans l'hydrocyclone 3. Le fonctionnement de l'hydrocyclone a été réglé au moyen des vannes de réglage 5 et 7 de façon à obtenir, d'une part, un flux (F) sortant de l'hydrocyclone par la tubulure 4 à un débit de 5,03 tonnes/h et, d'autre part, une suspension concentrée sortant de l'hydrocyclone par la tubulure 7 à un débit de 42,22 tonnes/h. Le flux (F) a été recyclé intégralement au réacteur de polymérisation 1; il comprenait 25 % en poids de particules de polyéthylène (copolymère comprenant 3 % en poids d'unités dérivées d'hexène), 0,5 % en poids de 1-hexène et 74,5 % en poids d'isobutane. La suspension concentrée comprenait 33,2 % en poids de particules de polymère. La suspension concentrée a été introduite dans un réacteur boucle 8. Le réacteur boucle 8 a été alimenté en continu en éthylène, en 1-hexène et en isobutane à un débit de, respectivement, 10, 0,40 et 12 tonnes/h. La température dans le réacteur 8 était de l'ordre de 88 °C; la pression était de l'ordre de 37 10⁵ Pa. Une partie de la suspension de particules de polyéthylène du réacteur 8 a été prélevée en continu par la tubulure 9 à un débit de 64,32 tonnes/h. Cette suspension comprenait 37,3 % en poids de particules de polymère. Cette suspension a été envoyée en continu dans l'hydrocyclone 10. Le fonctionnement de l'hydrocyclone 10 a été réglé au moyen des vannes de réglage 12 et 14 de façon à obtenir, d'une part, un flux (F') sortant de l'hydrocyclone 10 par la tubulure 13 à un débit de 29,2 tonnes/h et, d'autre part, une suspension concentrée sortant de l'hydrocyclone 10 par la tubulure 11 à un débit de 35,12 tonnes/h. Le flux (F') a été recyclé intégralement au réacteur de polymérisation 1; il comprenait 13,6 % en poids de particules de polymère, 0,5 % en poids de 1-hexène et 85,9 % en poids d'isobutane. La suspension concentrée comprenait 56,9 % en poids de particules de polymère.

La suspension concentrée a été envoyée dans la cuve 15 pour en séparer les particules de polymère.

Le polymère final comprenait environ 3 % en poids d'hexène, ce qui montre que le polymère produit dans le réacteur 8 avait une incorporation de l'hexène similaire à celle produite dans le réacteur 1. La résine de polyéthylène obtenue présentait un indice de fluidité MI₅ de 0,55 g/10 min et une teneur en Si (provenant du catalyseur) de 76 ppm. Elle présentait un diamètre moyen de 469 µm. La résine de polyéthylène a été fractionnée par tamisage et les fractions de particules de diamètre différent ont été analysées. Les résultats sont repris dans le tableau II.

### Exemple 6R (non conforme à l'invention)

Un copolymère d'éthylène et de 1-hexène ayant les mêmes propriétés (notamment teneur en hexène, indice de fluidité, taille moyenne des particules, teneur en résidus catalytiques, ...) que le copolymère produit dans l'exemple 5 a été produit dans le dispositif tel que décrit à l'exemple comparatif 2R, comprenant un seul réacteur boucle et un seul hydrocyclone. Cette résine a été fractionnée par tamisage et les fractions de particules de diamètre différent ont été analysées. Les résultats sont repris dans le tableau II. Exemple 7R (non conforme à l'invention)

Un copolymère d'éthylène et de 1-hexène ayant les mêmes propriétés (notamment teneur en hexène, indice de fluidité, taille moyenne des particules, teneur en résidus catalytiques, ...) que le copolymère produit à l'exemple 5 a été produit dans le dispositif tel que décrit à l'exemple comparatif 3R, comprenant un seul réacteur boucle.

Cette résine a été fractionnée par tamisage et les fractions de particules de diamètre différent ont été analysées. Les résultats sont repris dans le tableau II.

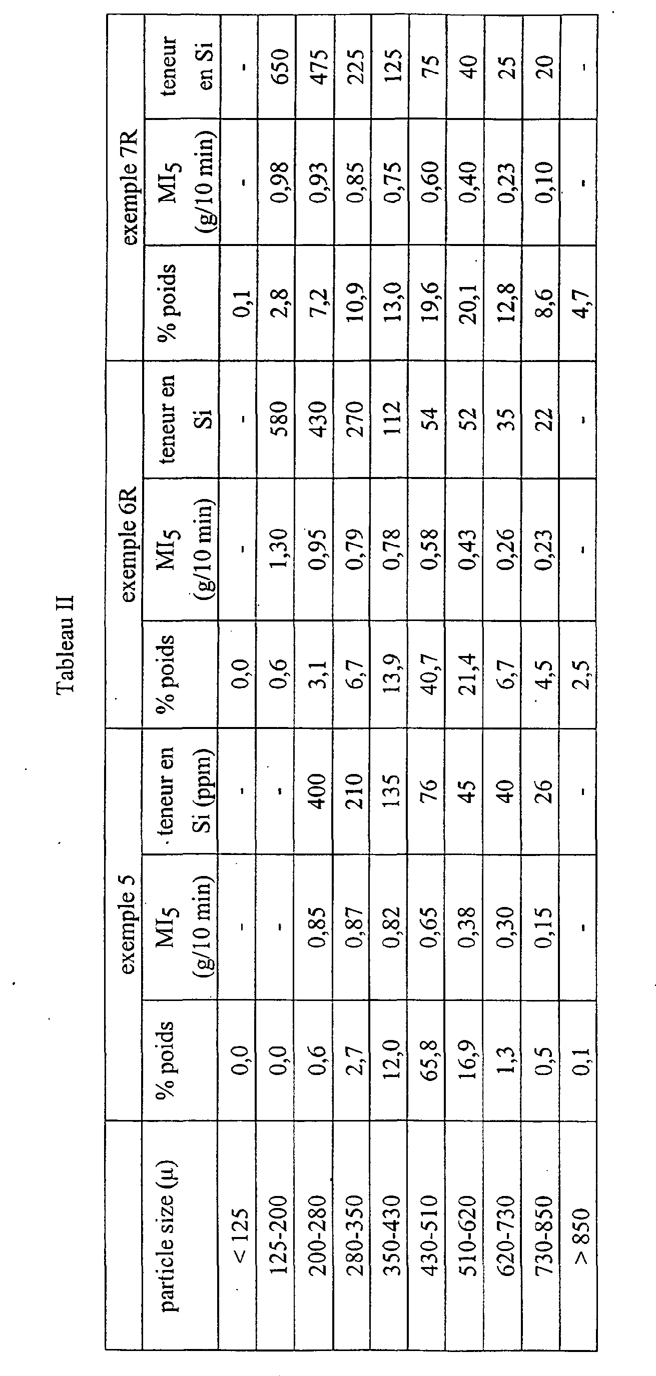

Bien que les résines produites dans les exemples 5, 6R et 7R présentent les mêmes caractéristiques moyennes, la résine obtenue par le procédé selon l'invention comprend nettement moins de fines particules. Par ailleurs, la résine obtenue par le procédé selon l'invention est nettement plus homogène.

## Revendications

1. Procédé continu de fabrication d'une résine de polyoléfine ayant une homogénéité améliorée, selon lequel:
(a) dans un réacteur de polymérisation (R) comprenant un diluant (D), une oléfine est polymérisée en continu en présence d'un catalyseur pour produire une suspension (S) comprenant ledit diluant (D) et des particules de polyoléfine,
(b) une partie de la suspension (S) est prélevée du réacteur (R),
(c) la suspension prélevée est envoyée dans un hydrocyclone dans lequel sont formés et séparés, d'une part, un flux (F) comprenant du diluant (D) et des particules de polyoléfine, et, d'autre part, une suspension (SC) concentrée en particules de polyoléfine,
(d) le flux (F) est prélevé de l'hydrocyclone et recyclé au réacteur de polymérisation (R), à l'étape (a),
(e) la suspension concentrée (SC) est prélevée de l'hydrocyclone et introduit dans un réacteur de polymérisation ultérieur (R'), alimenté en oléfine pour continuer la polymérisation et pour produire une suspension (S') comprenant le diluant (D) et des particules de polyoléfine,
(f) une partie de la suspension (S') est prélevée du réacteur de polymérisation ultérieur (R'),
(g) la suspension prélevée est envoyée dans un hydrocyclone dans lequel sont formés et séparés, d'une part, un flux (F') comprenant du diluant (D) et des particules de polyoléfine, et, d'autre part, une suspension (SC') concentrée en particules de polyoléfine,
(h) le flux (F') est prélevé de l'hydrocyclone et recyclé au réacteur de polymérisation (R), à l'étape (a),
(i) la suspension (SC') est prélevée de l'hydrocyclone et les particules de polyoléfine sont séparées de la suspension (SC').

2. Procédé selon la revendication 1, dans lequel, le flux (F) recyclé au réacteur de polymérisation (R) comprend de 0,5 à 90 % en poids de particules de polyoléfine par rapport au poids de particules de polyoléfine présentes dans la suspension prélevée du réacteur (R) dans l'étape (b).

3. Procédé selon la revendication 1 ou 2, dans lequel le flux (F') recyclé au réacteur de polymérisation (R) comprend de 0,5 à 90 % en poids de particules de polyoléfine par rapport au poids de particules de polyoléfine présentes dans la suspension prélevée du réacteur ultérieur (R') dans l'étape (f).

4. Procédé selon l'une quelconque des revendications 1 à 3, **caractérisé en ce que**, outre l'oléfine, au moins un autre comonomère copolymérisable avec l'oléfine est mis en oeuvre dans les réacteurs de polymérisation des étapes (a) et (e).

5. Procédé selon la revendication 4, **caractérisé en ce que** le rapport molaire comonomère/oléfine dans le réacteur de polymérisation (R') est compris entre 80 et 120 % du rapport molaire comonomère/oléfine dans le réacteur de polymérisation (R).

6. Procédé selon l'une quelconque des revendications 1 à 5, **caractérisé en ce qu'**un agent de régulation de la masse moléculaire est mis en oeuvre dans les réacteurs de polymérisation des étapes (a) et (e).

7. Procédé selon la revendication 6, **caractérisé en ce que** le rapport molaire agent de régulation/oléfine dans le réacteur de polymérisation (R') est compris entre 80 et 120 % du rapport molaire agent de régulation/oléfine dans le réacteur de polymérisation (R).

8. Procédé selon l'une quelconque des revendications 1 à 7, **caractérisé en ce que** la température de polymérisation dans l'étape (e) du procédé est comprise entre 95 et 105 % de la température de polymérisation dans l'étape (a).

9. Procédé selon l'une quelconque des revendications 1 à 8, **caractérisé en ce que**, dans l'étape (i), la suspension (SC') issue de l'étape (g) est soumise à un traitement sous des conditions de pression et de température qui assurent la vaporisation d'au moins une partie du diluant (D).

10. Procédé selon l'une quelconque des revendications 1 à 9, appliqué à la préparation d'un polyéthylène comprenant moins que 10 % en poids d'unités dérivées d'un autre comonomère.

11. Procédé selon la revendication 10, **caractérisé en ce que** le comonomère est le 1-butène et/ou le 1-hexène.

## Claims

1. Continuous process for preparing a polyolefin resin having an improved homogeneity, according to which:
(a) in a polymerisation reactor (R) containing a diluent (D), an olefin is polymerised continuously in the presence of a catalyst, in order to produce a suspension (S) containing said diluent (D) and polyolefin particles,
(b) a part of the suspension (S) is drawn off from the reactor (R),
(c) the drawn-off suspension is sent into a cyclone washer in which are formed and separated, on the one hand, a flux (F) containing diluent (D) and polyolefin particles and, on the other, a concentrated suspension (CS) of polyolefin particles,
(d) the flux (F) is drawn off from the cyclone washer and recycled to the polymerisation reactor (R), in stage (a),
(e) the concentrated suspension (CS) is drawn off from the cyclone washer and introduced into a subsequent polymerisation reactor (R') fed with olefin, in order to continue the polymerisation and to produce a suspension (S') containing the diluent (D) and polyolefin particles,
(f) a part of the suspension (S') is drawn off from the subsequent polymerisation reactor (R'),
(g) the drawn-off suspension is sent into a cyclone washer in which are formed and separated, on the one hand, a flux (F') containing diluent (D) and polyolefin particles and, on the other, a concentrated suspension (CS') of polyolefin particles,
(h) the flux (F') is drawn off from the cyclone washer and recycled to the polymerisation reactor (R), in stage (a),
(i) the suspension (CS') is drawn off from the cyclone washer and the polyolefin particles are separated from the suspension (CS').

2. Process according to claim 1, in which the flux (F) recycled to the polymerisation reactor (R) contains from 0.5 to 90 wt % of polyolefin particles compared with the weight of polyolefin particles present in the suspension drawn off from the reactor (R) in stage (b).

3. Process according to claim 1 or 2, in which the flux (F') recycled to the polymerisation reactor (R) contains from 0.5 to 90 wt % of polyolefin particles compared with the weight of polyolefm particles present in the suspension drawn off from the subsequent reactor (R') in stage (f).

4. Process according to any one of claims 1 to 3, **characterised in that**, in addition to the olefin, at least one other comonomer copolymerisable with the olefin is employed in the polymerisation reactors of stages (a) and (e).

5. Process according to claim 4, **characterised in that** the mole ratio comonomer/olefin in the polymerisation reactor (R') lies between 80 and 120% compared with the mole ratio comonomer/olefin in the polymerisation reactor (R).

6. Process according to any one of claims 1 to 5, **characterised in that** an agent for controlling the molecular weight is employed in the polymerisation reactors of stages (a) and (e).

7. Process according to claim 6, **characterised in that** the mole ratio control agentlolefin in the polymerisation reactor (R') lies between 80 and 120% of the mole ratio control agent/olefin in the polymerisation reactor (R).

8. Process according to any one of claims 1 to 7, **characterised in that** the polymerisation temperature in stage (e) of the process lies between 95 and 105% of the polymerisation temperature in stage (a).

9. Process according to any one of claims 1 to 8, **characterised in that**, in stage (i), the suspension (CS') coming from stage (g) is subjected to a treatment under pressure and temperature conditions which ensure the vaporisation of at least one part of the diluent (D).

10. Process according to any one of claims 1 to 9, applied to the preparation of a polyethylene containing less than 10 wt % of units derived from another comonomer.

11. Process according to claim 10, **characterised in that** the comonomer is 1-butene and/or 1-hexene.

## Patentansprüche

1. Kontinuierliches Verfahren zur Herstellung eines Polyolefinharzes mit einer verbesserten Homogenität, gemäß dem:
(a) in einem Polymerisationsreaktor (R), der ein Verdünnungsmittel (D) umfasst, ein Olefin kontinuierlich in Gegenwart eines Katalysators polymerisiert wird, um eine Suspension (S) herzustellen, die besagtes Verdünnungsmittel (D) und Polyolefinteilchen umfasst,
(b) ein Teil der Suspension (S) aus dem Reaktor (R) entnommen wird,
(c) die entnommene Suspension in einen Hydrocyclon eingeleitet wird, in dem einerseits ein Strom (F), der Verdünnungsmittel (D) und Polyolefinteilchen umfasst, und andererseits eine Suspension (SC), die an Polyolefinteilchen konzentriert ist, gebildet und getrennt werden,
(d) der Strom (F) aus dem Hydrocyclon entnommen wird und in den Polymerisationsreaktor (R) in den Schritt (a) zurückgeführt wird,
(e) die konzentrierte Suspension (SC) aus dem Hydrocyclon entnommen wird und in einen nachfolgenden Polymerisationsreaktor (R') eingeführt wird, der mit Olefin gespeist wird, um die Polymerisation fortzuführen und um eine Suspension (S') herzustellen, die das Verdünnungsmittel (D) und Polyolefinteilchen umfasst,
(f) ein Teil der Suspension (S') aus dem nachfolgenden Polymerisationsreaktor (R') entnommen wird,
(g) die entnommene Suspension in einen Hydrocyclon eingeleitet wird, in dem einerseits ein Strom (F'), der Verdünnungsmittel (D) und Polyolefinteilchen umfasst, und andererseits eine Suspension (SC'), die an Polyolefinteilchen konzentriert ist, gebildet und getrennt werden,
(h) der Strom (F') aus dem Hydrocyclon entnommen wird und in den Polymerisationsreaktor (R) in den Schritt (a) zurückgeführt wird,
(i) die Suspension (SC') aus dem Hydrocyclon entnommen wird und die Polyolefinteilchen aus der Suspension (SC') abgetrennt werden.

2. Verfahren gemäß Anspruch 1, bei dem der in den Polymerisationsreaktor (R) zurückgeführte Strom (F) 0,5 bis 90 Gew.-% Polyolefinteilchen, bezogen auf das Gewicht an Polyolefinteilchen, die in der aus dem Reaktor (R) im Schritt (b) entnommenen Suspension vorhanden sind, umfasst.

3. Verfahren gemäß Anspruch 1 oder 2, bei dem der in den Polymerisationsreaktor (R) zurückgeführte Strom (F') 0,5 bis 90 Gew.-% Polyolefinteilchen, bezogen auf das Gewicht an Polyolefinteilchen, die in der aus dem nachfolgenden Reaktor (R') im Schritt (f) entnommenen Suspension vorhanden sind, umfasst.

4. Verfahren gemäß einem der Ansprüche 1 bis 3, **dadurch gekennzeichnet, dass** außer dem Olefin wenigstens ein weiteres, mit dem Olefin copolymerisierbares Comonomer in den Polymerisationsreaktoren der Schritte (a) und (e) eingesetzt wird.

5. Verfahren gemäß Anspruch 4, **dadurch gekennzeichnet, dass** das Molverhältnis Comonomer / Olefin im Polymerisationsreaktor (R') zwischen 80 und 120 % des Molverhältnisses Comonomer / Olefin im Polymerisationsreaktor (R) liegt.

6. Verfahren gemäß einem der Ansprüche 1 bis 5, **dadurch gekennzeichnet, dass** ein Mittel zur Regulierung der Molekülmasse in den Polymerisationsreaktoren der Schritte (a) und (e) eingesetzt wird.

7. Verfahren gemäß Anspruch 6, **dadurch gekennzeichnet, dass** das Molverhältnis Regulierungsmittel / Olefin im Polymerisationsreaktor (R') zwischen 80 und 120 % des Molverhältnisses Regulierungsmittel / Olefin im Polymerisationsreaktor (R) liegt.

8. Verfahren gemäß einem der Ansprüche 1 bis 7, **dadurch gekennzeichnet, dass** die Polymerisationstemperatur beim Schritt (e) des Verfahrens zwischen 95 und 105 % der Polymerisationstemperatur beim Schritt (a) liegt.

9. Verfahren gemäß einem der Ansprüche 1 bis 8, **dadurch gekennzeichnet, dass** im Schritt (i) die aus dem Schritt (g) hervorgegangene Suspension (SC') einer Behandlung unter Druck- und Temperaturbedingungen unterzogen wird, die das Verdampfen von wenigstens einem Teil des Verdünnungsmittels (D) gewährleisten.

10. Verfahren gemäß einem der Ansprüche 1 bis 9, angewandt auf die Herstellung eines Polyethylens mit weniger als 10 Gew.-% von einem anderen Comonomer abgeleiteten Einheiten.

11. Verfahren gemäß Anspruch 10, **dadurch gekennzeichnet, dass** das Comonomer 1-Buten und/oder 1-Hexen ist.
